(19) **Europäisches Patentamt / European Patent Office / Office européen des brevets**

(11) **EP 2 358 797 B1**

(12) **FASCICULE DE BREVET EUROPEEN**

(45) Date de publication et mention de la délivrance du brevet:
**05.10.2016 Bulletin 2016/40**

(21) Numéro de dépôt: **09764459.5**

(22) Date de dépôt: **02.12.2009**

(51) Int Cl.:
*C08J 9/00* (2006.01)   *C08J 9/06* (2006.01)
*C08L 67/06* (2006.01)   *C08K 5/01* (2006.01)
*C08K 5/3492* (2006.01)   *C08K 5/16* (2006.01)
*C08K 5/053* (2006.01)   *C08K 5/51* (2006.01)
*C09D 167/06* (2006.01)   *C09J 167/06* (2006.01)
*C08F 283/01* (2006.01)   *C09D 163/10* (2006.01)
*C09D 4/00* (2006.01)   *C09D 5/18* (2006.01)

(86) Numéro de dépôt international:
**PCT/EP2009/008587**

(87) Numéro de publication internationale:
**WO 2010/069465 (24.06.2010 Gazette 2010/25)**

(54) **COMPOSITION THERMODURCISSABLE POUR PIECES COMPOSITES ET REVETEMENTS INTUMESCENTS**

WÄRMEHÄRTBARE ZUSAMMENSETZUNG FÜR VERBUNDTEILE UND INTUMESZIERENDE ÜBERZÜGE

HEAT CURABLE COMPOSITION FOR COMPOSITE PARTS AND INTUMESCENT COATINGS

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **18.12.2008 FR 0807147**

(43) Date de publication de la demande:
**24.08.2011 Bulletin 2011/34**

(73) Titulaire: **Cray Valley S.A.**
**92400 Courbevoie (FR)**

(72) Inventeurs:
• **HERMAN, Serge**
  **F-62290 Noeux-les-Mines (FR)**
• **COUDEVYLLE, Urbain**
  **F-59496 Salome (FR)**
• **FOUSSARD, Thierry**
  **F-59000 Lille (FR)**

(74) Mandataire: **Modiano, Micaela Nadia**
**Modiano & Partners (DE)**
**Thierschstrasse 11**
**80538 München (DE)**

(56) Documents cités:
**WO-A1-00/23495**     **WO-A1-01/29123**
**WO-A1-97/31056**     **BE-A1- 868 828**
**US-A1- 2005 215 708**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne des compositions thermodurcissables, en particulier pour pièces composites intumescentes, un procédé de préparation, des utilisations de ces compositions thermodurcissables et plus particulièrement dans les domaines du transport, du bâtiment, du génie civil et des travaux publics, des loisirs et mobiliers urbains ainsi que les produits finis tels que les pièces composites, les revêtements, mastics, colles structurales, gel coats (revêtements de surface) et top coats (revêtements de surface de finition) à base de ces compositions.

L'utilisation de matériaux à base de compositions thermodurcissables dans ce domaine est en augmentation pour des questions de gains de poids et d'énergie pour une performance mécanique élevée. D'autre part, l'exigence de normes de sécurité de plus en plus strictes dans ce domaine d'utilisation accentue le besoin, déjà important, de mise en oeuvre de matériaux à performances élevées ayant une résistance au feu significativement améliorée en l'absence d'halogènes et plus particulièrement de matériaux intumescents pour des applications de plus en plus spécifiques.

La performance intumescente est difficile à atteindre et en particulier pour une composition thermodurcissable, pour différentes raisons liées à la complexité du phénomène et aussi à la dépendance du caractère intumescent global, sur la satisfaction de plusieurs facteurs ou de performances plus spécifiques, difficiles à concilier a priori. L'amélioration du comportement intumescent selon la présente invention pour un matériau composite candidat requiert ainsi, comme pour la composition thermodurcissable dont il est issu, de remplir certaines exigences et critères comme les suivants :

- une capacité de ramollissement et gonflement significatifs sous l'effet de la montée de la température pour pouvoir former une coquille expansée et isolante à la source de chaleur et à l'oxygène,
- une tenue cohésive suffisante de cette coquille, qui doit avoir une structure expansée uniforme et homogène présentant une bonne tenue mécanique,
- un comportement intumescent qui satisfait au moins le niveau HL2 et de préférence le niveau HL3 selon l'exigence R1 de la norme prCEN/TS 45545-2:2008, avec absence de tout halogène dans la composition thermodurcissable et absence de tout composé cancérigène mutagène et reprotoxique (CMR) et avec une réduction de la toxicité et de l'opacité des fumées générées,
- plus particulièrement pour les pièces stratifiées, un comportement intumescent indépendant de la qualité de la face exposée au feu.

Encore plus particulièrement, pour certaines compositions préférées, pouvoir avoir :

- une stabilité au stockage de la composition thermodurcissable, conduisant à un matériau composite final, ayant une stabilité exprimée en termes d'évolution minimale de la viscosité sur une durée de stockage jusqu'à 2 mois, correspondante à une évolution inférieure ou égale à 15% par rapport à la viscosité initiale. Cette exigence est liée à la facilité de manipulation et de la mise en oeuvre de la formulation thermodurcissable lors de l'application.
- un classement M1F1 selon la norme NF EN ISO 16-101 avec une formulation exempte de tout halogène et de tout composé cancérigène, mutagène et reprotoxique (CMR) et avec une toxicité et une opacité réduites des fumées générées : classement M1 caractérisant la propagation de flamme selon q < 2,5 et classement F1 caractérisant l'opacité et la toxicité des effluents gazeux selon 5 < IF < 20.

En fait, le problème technique à résoudre est un compromis spécifique et difficile à trouver, en termes de performances des compositions thermodurcissables visées, qui doivent présenter à la fois une excellente résistance au feu et à la chaleur, avec une toxicité et une opacité réduites des fumées générées mais également une tenue mécanique satisfaisante et ceci sans affecter ni les caractéristiques applicatives ni la facilité d'application et ni la facilité de mise en oeuvre de ladite composition, avec une bonne mouillabilité, et de bonnes propriétés de manipulation et de stockage. Ce compromis n'est possible que par un choix spécifique de constituants (composants) de ladite composition thermodurcissable et par le choix spécifique de leurs proportions relatives (spécifiques). De préférence, la viscosité de la composition est stable sur une durée de stockage d'au moins 2 mois avec une variation ne dépassant pas 15% par rapport à la valeur initiale. La viscosité de la composition peut être et est une caractéristique importante pour certaines applications visées, pour lesquelles les procédés de mise en oeuvre sont variés, comme par exemple : le moulage par contact ou par projection ou par compression par voie humide ou par centrifugation ou par enroulement filamentaire ou par imprégnation continue ou par coulée ou par pultrusion ou par moule fermé comme l'injection ou l'infusion ou le RTM (Resin Transfer Molding).

WO 97/31056 décrit des formulations thermodurcissables de polyesters insaturés pour l'amélioration de la résistance au feu, comprenant, comme composants anti-feux essentiels, de la mélamine et un composé phosphoré. Plus particulièrement, ces compositions excluent la présence d'agents favorisant la formation d'un résidu carbonisé, appelés autrement sous le nom d'agents « char source ». Ces compositions ne donnent pas de caractère intumescent car il y a absence de formation de bouclier intumescent.

Malgré les efforts accomplis de développement de matériaux intumescents améliorés, aucun produit commercial à ce jour ne donne une satisfaction complète en terme d'intumescence suivant les exigences définies ci-dessus. Cependant, le besoin d'amélioration du caractère intumescent des compositions thermodurcissables décrites dans l'état de l'art persiste encore. La solution spécifique de la présente invention satisfait ce besoin, à travers la proposition d'une composition thermodurcissable spécifique ayant des caractéristiques particulières par un effet de synergie généré par la combinaison, dans des conditions spécifiques, des composants de la composition thermodurcissable de la présente invention.

La portée de l'invention et divers modes de réalisation de l'invention sont définis par l'annexée revendications.

Le premier objet de la présente invention concerne donc une composition thermodurcissable spécifique et plus particulièrement une composition thermodurcissable, pour pièces composites résistantes au feu ou plus particulièrement intumescentes, qui est exempte (libre) de tout additif halogéné et de toute structure halogénée dans ses composants et qui comprend :

a) pour 100 parties en poids d'une résine, poids exprimé en poids de résine sèche (sans diluant), comprenant ou constituée de :

a1) au moins un polyester insaturé, ayant un indice d'acide inférieur à 10, de préférence ne dépassant pas 8 et plus préférentiellement inférieur à 5, ou une combinaison de a1) avec

a2) au moins un vinyl ester, de préférence sélectionné parmi les vinyl esters dérivés des résines formo-phénoliques époxydées, plus préférentiellement dérivés des résines époxy-novolac

b) 40 à 200, de préférence 50 à 180 et plus préférentiellement 60 à 160 parties en poids d'au moins un diluant réactif sélectionné parmi les monomères éthyléniquement insaturés copolymérisables avec ladite résine, de préférence sélectionnés parmi les monomères (méth)acryliques et/ou vinyliques et/ou allyliques et plus préférentiellement avec ledit composant b) comprenant ou constitué de, un composant b1) comprenant ou constitué de, au moins un monomère vinyl ou allyl aromatique et en option, b) comprenant ou constitué de, un composant b2) comprenant ou constitué de, au moins un monomère (méth)acrylique multifonctionnel de fonctionnalité allant de 2 à 4

c) 20 à 110, de préférence de 25 à 100 parties en poids d'au moins un agent d'expansion par décomposition thermique, sélectionné parmi : mélamine et dérivés de mélamine, guanidine, glycine, urée, triisocyanurates, azodicarbonamide, de préférence mélamine et dérivés et plus préférentiellement la mélamine

d) 0 à 250, de préférence de 0 à 175 parties en poids de trihydrate d'Aluminium

e) 10 à 80, de préférence 10 à 70 parties en poids d'au moins un agent précurseur de carbonisation appelé autrement agent « char source », sélectionné parmi : les polyols multifonctionnels sucres, amidon, fécule de pomme de terre, le pentaérythritol (PET) et/ou dérivés de PET et/ou érythritol et/ou sorbitol, de préférence ces dérivés de PET étant le pentaérythritol (PET) alkoxylé, et/ou le di- et/ou le tri- pentaérythritol et plus préférentiellement ledit composant e) est sélectionné parmi : le pentaérythritol et/ou dérivés de PET comme prédéfinis et encore plus préférentiellement le pentaérythritol et pentaérythritol alkoxylé

f) 50 à 200, de préférence de 70 à 175 parties d'un composé parmi : au moins un dérivé phosphoré et/ou au moins un dérivé de l'acide borique, de préférence le borate d'ammonium, ledit composé f) étant de préférence un dérivé phosphoré sélectionné parmi les : phosphonates et/ou phosphates (lesquels phosphates comprennent les polyphosphates) et/ou acides et/ou sels correspondants ou le phosphore rouge, et de préférence particulière sélectionné parmi : les phosphates d'urée ou d'ammonium (ledit ammonium pouvant dériver d'amines) et/ou les polyphosphates d'ammonium, et plus préférentiellement parmi : les polyphosphates d'ammonium et encore plus préférentiellement parmi les polyphosphates d'ammonium ayant un nombre n de motifs d'au moins 1000, couramment appelés autrement des polyphosphates d'ammonium de phase II

g) en option, au moins un oxyde métallique, tel que le $TiO_2$ et de préférence sous forme de pâte concentrée et plus particulièrement à un taux d'oxyde métallique allant jusqu'à 25 et de préférence jusqu'à 6 parties en poids (d'oxyde métallique) et plus préférentiellement de 2 à 25 et encore plus préférentiellement de 2 à 6 parties en poids

h) en option, autres additifs et charges

i) en option, des renforts à base de fibres naturelles ou synthétiques et tissus correspondants, de préférence renforts parmi : fibres, filaments, mats et tissus de verre ou fibres de carbone ou de polyamide, dans ce dernier cas de préférence un polyamide aromatique tel que le Kevlar[R]

et avec,

ledit polyester a1), étant à base d'un composant acide constitué d'au moins 60% en mol d'acide et/ou anhydride maléique et d'un composant polyol constitué d'au moins 70% en mol de propylène glycol (PG), avec le restant éventuel étant sélectionné parmi le dipropylène glycol (DPG) et/ou l'éthylène glycol (EG) et/ou le diéthylène glycol (DEG) et/ou le néopentyl glycol (NPG) et/ou le 2-Me propanediol (2-MPD) et/ou butanediols (BD) et/ou pentane diols (PD) et/ou hexanediols (HD), dans les trois derniers cas de diols, lesdits diols incluant leur dérivés substitués méthyle et/ou éthyle.

La résine a) peut être à base de a1) résine polyester insaturé ou à base d'un mélange de a1) et a2) résine vinyl ester telle que définie ci-haut (mélange = a1) + a2)). Ledit polyester insaturé a1) peut être un mélange d'au moins deux résines polyesters insaturés tels que décrits ci-haut. De même, ledit vinyl ester a2) peut être un mélange d'au moins deux résines vinyl esters. De préférence dans le cas d'un mélange de vinyl esters, ce mélange comprend au moins un vinyl ester à base de résines époxydes formo-phénoliques de type époxy-novolac, et plus préférentiellement lesdits vinyl esters formo-phénoliques, constituent au moins 50% en poids de ce mélange de vinyl esters. Il faut préciser que les deux termes pouvant être employés « résine polyester insaturé » ou « polyester insaturé », signifient la même chose à défaut d'autre spécification plus particulière. La même précision est valable pour les termes « résine vinyl ester » et « vinyl ester ». Dans les deux cas, le poids de ladite résine a) pris en compte est la matière sèche (résine) sans diluant. De préférence, la résine a) est soit exclusivement à base de polyester insaturé a1) tel que défini ci-haut (y compris mélange de polyesters insaturés) soit à base d'un mélange entre a1) et a2) (mélange = a1) + a2)), tels que définis ci-haut (a2) = vinyl ester) avec un taux de polyester insaturé a1) de plus de 50% et de préférence d'au moins 70% en poids par rapport au poids dudit mélange de a1) + a2). Dans le cas où ledit vinyl ester a2) est formo-phénolique, ledit mélange a1) + a2) peut se faire dans toute proportion entre a1) et a2).

La résine polyester insaturé et/ou la résine vinyl ester sont bien connues à l'homme du métier dans le domaine des composites ou des gel coats.

Un polyester insaturé est obtenu en général par réaction de polycondensation (estérification) entre un composant acide comprenant au moins un acide et/ou anhydride polycarboxylique (polyacide) comprenant une insaturation éthylénique, comme l'acide et/ou anhydride maléique, en présence éventuelle d'un polyacide/anhydride saturé, avec un composant polyol, tel que le propylène glycol (PG).

Un vinyl ester est un oligomère époxy acrylate, résultant de l'estérification par l'acide (méth)acrylique, d'un oligomère polyépoxydé, par exemple diépoxydé en bout de chaîne comme le Diglycidyl ether de Bisphénol A (DGEBA) ou multiépoxydé (fonctionnalité supérieure à 2) comme les résines formophénoliques époxydées, et plus particulièrement les résines époxy-novolac.

De préférence, ledit vinyl ester a2) est sélectionné de manière à ce qu'il y ait au moins un vinyl ester dérivé d'une structure époxydée formophénolique, plus préférentiellement de fonctionnalité supérieure à 2 et encore plus préférentiellement d'au moins 3 et encore plus particulièrement d'au moins 7 et plus particulièrement encore, d'une résine époxy-novolac. Ces résines époxydes formophénoliques précurseurs de vinyl esters en question, sont de préférence de structure linéaire et sont obtenues par réaction de condensation entre l'épichlorhydrine et des condensats phénol-formol. Lesdits vinyl esters ont de préférence des indices d'acides inférieurs à 20.

Selon un mode particulièrement préféré, ledit composant diluant réactif b) comprend :

b1) un monomère comprenant :

b1a) au moins un monomère vinyl ou allyl aromatique choisi parmi : le styrène et/ou vinyl toluènes et/ou tert-butyl styrène et/ou divinyl benzènes, divinyl toluènes, pour les vinyl aromatiques et/ou parmi les diallyl phtalates pour les allyl aromatiques et éventuellement,
b1b) au moins un monomère (méth)acrylique monofonctionnel, de préférence choisi parmi les monomères méthacryliques, tels que le méthacrylate de méthyle (MAM) et l'hydroxy éthyl méthacrylate (HEMA) et en option

b2) au moins un monomère (méth)acrylique multifonctionnel, comportant au moins 2, de préférence de 2 à 4 et plus préférentiellement de 2 à 3 fonctions (méth)acryliques et encore plus préférentiellement avec ledit diluant monomère b) comprenant au moins un monomère b1) et au moins un monomère b2), comme défini ci-haut. Plus particulièrement et préférentiellement, le taux en poids du monomère (méth)acrylique multifonctionnel b2) est de 2 à 60%, de préférence de 2 à 40% et encore plus préférentiellement de 5 à 30% du poids total du composant diluant b).

Les plus préférés parmi lesdits monomères b1a) sont le styrène et/ou vinyl toluènes et les plus préférés parmi lesdits monomères (méth)acryliques b1b) sont les monomères méthacryliques, comme le méthacrylate de méthyle (MAM) et/ou l'hydroxy éthyl méthacrylate (HEMA). Ledit composant b) tient compte d'une première partie de diluant réactif, présent avec la résine diluée de départ, car les produits commerciaux résines polyesters insaturés ou vinyl esters sont dilués et comprennent d'habitude au départ un taux de 25 à 45% en poids de diluant réactif, comme le styrène. Dans ledit monomère diluant b), on compte également le monomère diluant d'un éventuel additif dans cette composition, comme par exemple les additifs rhéologiques de type Bentonite (par exemple Claytone®) en dispersion dans le styrène.

Une deuxième partie de diluant réactif b) est éventuellement nécessaire pour ajuster le taux final de diluant réactif b) dans la composition thermodurcissable finale ou formulation d'application finale, ceci en fonction des besoins de l'application visée(ajustement de viscosité).

Parmi les monomères b2) pouvant être utilisés pour l'invention, on peut citer les suivants : butane diol 1,4 di(méth)acrylate (BDD(M)A), butane glycol 1,3 di(méth)acrylate (BGD(M)A), triméthylol propane tri(méth)acrylate (TMPT(M)A), éthylène glycol di(méth)acrylate (EGD(M)A), diéthylène glycol di(méth)acrylate (DEGD(M)A), hexaméthylène glycol di(méth)acrylate (HMD(M)A, pentaérythritol tetra(méth)acrylate (PETT(M)A, néopentyl glycol di(méth)acrylate (NPGD(M)A). Les monomères b2) préférés sont les monomères méthacryliques. Le monomère b2) le plus préféré est le BDD(M)A et encore plus préféré le BDDMA.

L'agent d'expansion c) se décompose de préférence dans une plage de température allant de 130 à 350°C plus préférentiellement de 200 à 320°C. Lesdits dérivés de mélamine peuvent être des composés tels que le melam, melem, melon, cyanurate de mélamine, phosphate de mélamine ou borate de mélamine. Le melam, melem et melon sont des dérivés cycliques condensés de mélamine (avec élimination d'ammoniac), dérivés bien connus à l'homme du métier. Le melam correspond à la condensation de deux molécules de mélamine avec élimination d'ammoniac, le melem est une structure condensée de 3 cycles dérivé du melam par élimination d'ammoniac et le melon est sous la forme polycondensée de polymère polyamine dérivé du melam. Le composant c) préféré est la mélamine et ses dérivés, tels que melam, melem et melon et encore plus préféré la mélamine, avec une température de décomposition (pour la mélamine) proche de 300°C.

Les composants c), d), e), f), g) sont additionnés de préférence sous la forme de poudre dans la composition de résine a) diluée avec (comprenant) le diluant b) et avec ledit composant h) pouvant être liquide ou solide dans le cas de certains additifs, les charges étant solides. Le taux dudit diluant b) peut être ajusté dans la plage indiquée ci-dessus, pour ajuster la viscosité finale de la formulation en fonction de l'application finale et du procédé de mise en oeuvre.

Dans le cas de l'application pour stratifiés et d'autres applications, sauf pour les applications pultrusion et compounds (comme BMC), la viscosité de ladite composition thermodurcissable est ajustée si nécessaire pour avoir une viscosité à l'utilisation inférieure à 1500 mPa.s, de préférence inférieure à 1000 mPa.s et plus préférentiellement inférieure à 500 mPa.s, ladite viscosité étant mesurée à 23°C et sous gradient de cisaillement de 1000 s$^{-1}$. Dans le cas de la pultrusion, de préférence cette viscosité reste inférieure à 2500 mPa.s.

Le composant d) est optionnel et peut être présent à une teneur allant de 0 à 250 parties et de préférence de 0 à 175 parties en poids pour 100 parties en poids de ladite résine a).

Le composant e) est un agent précurseur de carbonisation, appelé couramment « char source », sa fonction est de favoriser la formation d'un film carbonisé protecteur lequel, par l'expansion préalable causée par la décomposition thermique de l'agent c), devient ainsi un écran (coquille expansée carbonisée) isolant thermique (bouclier thermique) et protégeant le matériau de l'exposition au feu.

La présence du composant g) et/ou éventuellement du composant d) a tendance à améliorer la consistance du bouclier thermique protecteur, formé après exposition au feu. Dans ce cas, le composant d) est présent à un taux allant jusqu'à 250 et de préférence jusqu'à 175 parties en poids pour 100 parties de résine a).

En fonction de l'application, les autres additifs h) peuvent être des additifs de rhéologie, tels que la silice pyrogénée ou les argiles/bentonites, par exemple les Claytone® ou les additifs anti-retrait ou LP (low profile) ou additifs dispersants (tensioactifs) ou agents mouillants ou agents de démoulage, pigments, pâtes colorantes ou des charges minérales telles que le carbonate de calcium ou le talc (silicate de magnésium dihydroxylé) ou boehmite (oxydehydroxyde d'aluminium : AlO(OH)).

Ces autres additifs h) peuvent être adaptés en fonction de l'application finale et en fonction du procédé de mise en oeuvre utilisé et sont bien connus de l'homme du métier dans le domaine des compositions thermodurcissables.

Ledit polyester insaturé est obtenu par des méthodes connues par l'homme du métier, par une réaction de polycondensation entre un composant diacide et/ou anhydride carboxylique, comportant un diacide ou anhydride éthyléniquement insaturé tel que le diacide/anhydride maléique (y compris forme acide fumarique) et/ou itaconique de préférence maléique, et un composant polyol. De préférence, ledit polyester insaturé est à base d'un composant acide constitué de 60 à 100% et de préférence de 100% en mol d'acide et/ou d'anhydride maléique, le restant par rapport à 100% (c'est à dire de 0 à 40% et de préférence 0%) étant de préférence l'acide ou anhydride ortho-phtalique et/ou iso-phtalique. Le taux d'acide/anhydride éthyléniquement insaturé dans le composant acide contrôle le degré d'insaturation et la réactivité dudit polyester. Ledit polyester insaturé peut également être un polyester insaturé modifié au dicyclopentadiène (DCPD). De préférence, le composant polyol dudit polyester a1) est constitué de 70 à 100% mol de propylène glycol (PG), et plus préférentiellement de 100% en mol de PG, avec le restant éventuel, étant au plus 30% en mol et de préférence de 0% en mol de ce composant polyol, avec lesdits éventuels polyols restants étant sélectionnés comme spécifié ci-haut. Selon un mode plus particulier de la présente invention, ledit polyester a1) est à base d'un composant diacide constitué de 60 à 100% en mol de diacide/anhydride maléique et à base d'un composant polyol constitué de 70 à 100% en mol de PG. Encore plus préférentiellement, la résine polyester insaturé a1) est une résine avec un composant acide à 100% mol en maléique et avec un composant polyol à 100% en PG.

Les résines polyesters insaturés a1) ayant au moins 60%, de préférence de 60 à 100% et plus préférentiellement 100% en mol de maléique dans le composant acide et au moins 70%, de préférence 70 à 100% et plus préférentiellement 100% de PG dans le composant polyol, conviennent plus particulièrement pour des formulations ayant un comportement anti-feu remplissant les critères M1F1 selon NF EN ISO 16-101.

La viscosité de la composition thermodurcissable selon l'invention dépend de l'application finale et du procédé de mise en oeuvre utilisé. Les compositions thermodurcissables pour stratifiés ont une viscosité inférieure à 1500 mPa.s et de préférence inférieure à 1000 mPa.s et plus préférentiellement inférieure à 500 mPa.s à 23°C pour un gradient de cisaillement de 1000 s-1.

Les compositions selon la présente invention ont les avantages suivants par rapport aux compositions connues de l'état de l'art :

- compositions fluides et faciles à mettre en oeuvre par les procédés connus de mise en oeuvre cités ci-dessus, sans halogènes, sans composés toxiques (CMR) et compositions remplissant au moins le critère HL2 et de préférence HL2 et HL3 selon l'exigence R1 de la norme prCEN/TS 45545-2:2008.
- à la fois tenue au feu comme indiqué, associée à un maintien de la tenue mécanique du matériau et avec les fumées dégagées ayant une opacité et toxicité réduites.

Plus particulièrement, lesdites compositions sont stables en termes d'évolution de la viscosité avec le temps de stockage, avec une augmentation en 2 mois de stockage ne dépassant pas 15% par rapport à la viscosité initiale de la composition (formulation).

Aussi divulgué est une composition thermodurcissable servant à la préparation (précurseur) d'une composition thermodurcissable selon l'invention telle que définie ci-haut, laquelle composition (précurseur) comprend ou est constituée des composants a) et b) tels que définis ci-haut. Plus particulièrement, cette composition (précurseur) est constituée de la résine a) et des monomères b) tels que définis ci-dessus, c'est à dire sans les autres composants.

La présente invention concerne aussi un procédé de préparation de la composition thermodurcissable selon l'invention, lequel procédé comprend l'étape de mélange d'une composition précurseur telle que définie ci-haut avec lesdits composants c), d) (d), si présent), e), f), g) (g), si présent) et h) (h), si présent) tels que définis ci-haut et éventuellement comprenant une dernière étape d'addition desdits renforts i).

La présente invention concerne aussi une composition de moulage pour pièces composites ou une composition d'application pour stratifiés ou composition de colle structurale ou de mastic ou de béton polyester ou de masses de coulées ou de gel coat ou de top coat, laquelle composition comprend au moins une composition thermodurcissable telle que définie ci-haut selon l'invention. Une telle composition peut être une composition de moulage composite parmi : BMC (Bulk Molding Compounds), AMC (Advanced Molding Compound), CIC (Continuous Impregnating Compound) qui sont bien connues par l'homme du métier qui connaît bien les compositions de moulage pour composites. Ces compositions comprennent comme renforts i), des fibres naturelles telles que les fibres de chanvre et/ou de lin et/ou des fibres synthétiques et/ou tissus correspondants et en particulier des fibres de verre ou de carbone ou de polyamide, en particulier de polyamide aromatique, et les tissus correspondants.

Selon une autre possibilité, ladite composition peut être une composition d'application par voie de pultrusion pour pièces composites, par exemple pour des profilés pour baguettes électriques ou par voie de projection (pistolet) ou par contact (rouleau) pour stratifiés, par exemple pour les pièces de capotage, pour les panneaux et les pièces industrielles ou par voie d'infusion pour pièces industrielles ou par voie de centrifugation pour pipes et canalisations ou par voie d'injection/compression (RTM : Resin Transfer Molding) pour pièces de transport (comme les cabines) ou par voie d'enroulement filamentaire pour silos et containers ou par voie de coulée pour béton polyester ou par voie d'imprégnation continue pour plaques ondulées. Selon une autre possibilité, il peut s'agir d'une composition de colle structurale pour assemblage de pièces composites ou d'une composition de gel coat ou de top coat, pigmentée ou non pigmentée.

Les utilisations particulièrement visées des compositions thermodurcissables telles que définies selon la présente invention concernent la fabrication et l'utilisation de pièces composites moulées ou d'autres pièces composites, comme les pièces composites stratifiées ou de colles structurales ou de mastics ou de gel coats ou de top coats ou autres revêtements ou de pièces industrielles, dans le domaine de la résistance au feu. Plus particulièrement, les matériaux qui résultent de cette utilisation de compositions thermodurcissables sont résistants au feu et/ou intumescents.

Une utilisation préférée concerne des applications dans le domaine du transport, plus particulièrement, dans le domaine du transport automobile, transport ferroviaire (plus particulièrement transport urbain, par train ou métro), transport maritime et transport aéronautique, dans le domaine du bâtiment, dans le domaine du génie civil et des travaux publics, tels que les ponts et tunnels ou dans le domaine des loisirs et des mobiliers urbains tels que les parcs de loisirs.

Plus particulièrement, l'utilisation de la composition thermodurcissable telle que définie selon la présente invention concerne la fabrication et l'utilisation de : pièces composites moulées ou stratifiées, de colles structurales ou de mastics ou de gel coats ou de top coats qui en résultent, pour le transport ferroviaire. Ces pièces et produits finis satisfont plus particulièrement au moins au critère HL2 et de préférence HL2 et HL3 selon l'exigence R1 de la norme prCEN/TS 45545-2:2008.

Plus particulièrement, les compositions thermodurcissables selon l'invention sont utilisées pour la fabrication de panneaux structuraux ou pour la fabrication d'autres pièces composites, pour les moyens de transport public tels que le transport ferroviaire (train, incluant TGV, RER, métro), le transport maritime (bateaux) ou transport routier (camions, voitures).

Comme autres applications possibles, on peut citer :

- dans le bâtiment : pour revêtements (rénovation sur support existant, béton ou autre) ou mise en place de panneaux structuraux lors de la construction,
- application béton pour bâtiment ou travaux publics : soit frettage de bétons existants (comme tunnels ou ponts) soit protection d'éléments existants (comme les piliers) soit réalisation de béton polymère intumescent, en remplacement du ciment hydraulique,
- application avec fonction intégrée, par exemple réalisation de coffrages en stratifié intumescent, dans lesquels le béton structurel traditionnel sera coulé, ce procédé pouvant s'appliquer dans le domaine des piliers structurels ou dans le domaine des dalles de béton etc.

Finalement, la présente invention concerne des pièces composites moulées ou d'autres pièces composites transformées ou des revêtements, des joints ou des applications de colles structurales ou de mastics pour composites et gel coats, appliqués sur lesdites pièces composites ou sur d'autres substrats, avec lesdites pièces ou lesdits revêtements ou gel coats ou top coats ou joints (ou applications) résultant de la réticulation d'au moins une composition thermodurcissable telle que définie selon la présente invention, et avec ces produits finis ayant un caractère intumescent.

Plus préférentiellement, lesdites pièces composites, moulées ou transformées, revêtements ou joints ou applications de colles structurales ou de mastics ou des gel coats ou top coats, tels que définis selon la présente invention, ont un comportement anti-feu remplissant au moins le critère HL2 et plus préférentiellement le critère HL2 et HL3 selon l'exigence R1 de la norme prCEN/TS 45545-2:2008.

**Partie expérimentale**

A) **Matières premières utilisées** : voir tableau 1 ci-dessous

Tableau 1 : Matières premières utilisées, références et origine

| Référence produit | Fournisseur | Fonction technique | Nature chimique |
|---|---|---|---|
| EPOVIA ® OPTIMUM KRF 1001 | Cray Valley | Résine vinyl ester | Vinyl ester à base de Bisphenol A : 41,5% styrène (% résine sèche : 58,5%); Viscosité : 4,5 dPa.s (25°C), IA < 8 |
| EPOVIA® OPTIMUM KRF 1051 | Cray Valley | Résine vinyl ester | Vinyl ester à base d'époxy-novolac : 30,0% styrène (% résine sèche : 70,0%); Viscosité : 4,5 dPa.s (25°C), IA< 15 et de fonctionnalité de 3,6 |
| NORSODYNE® S86407TB | Cray Valley | Résine polyester insaturé (UPR) | UPR à base de maléate-isophtalate de NPG et de DPG : 42,0% styrène (% résine sèche : 58,0%); Viscosité : 8,5 dPa.s (25°C) |
| Enydyne® C40 8161 CT | Cray Valley | Résine polyester insaturé (UPR) | UPR modifiée DCPD classée M2F1 selon NF EN ISO 16-101, utilisée comme résine support (substrat) de stratification |
| Norsodyne ®G 703 | Cray Valley | Résine polyester insaturé (UPR) | UPR à base de maléate (46% mol) -isophtalate (54%) de PG (100%) : 44,5% styrène (% résine sèche : 55,5%); Viscosité : 3,2 dPa.s (25°C) |
| Norsodyne® UPEX 081341 | Cray Valley | Résine polyester insaturé (UPR) | UPR à base de maléate(100%) de PG(100%), $I_A$=3 et $I_{OH}$= 67, 35,9% styrène (64,1% résine sèche),Viscosité 5,7 dPas (25°C) |
| HDK® N20 | WACKER | Agent rhéologique selon h) | Silice pyrogénée |
| Claytone® PS3* | Chimilab Essor | Additif rhéologique h) | bentonite modifiée sel d'ammonium quaternaire |

(suite)

| Référence produit | Fournisseur | Fonction technique | Nature chimique |
|---|---|---|---|
| Styrène | Total Petro Chemical | Diluant réactif b1a) | Styrène (> 99,7% de pureté) |
| Sartomer® SR 214 (BDDMA) | Sartomer | Diluant réactif b2 | Butane diol 1,4-diméthacrylate (BDDMA) |
| MAM | ARKEMA | Diluant réactif b1b) | Méthyl méthacrylate |
| FR CROS® 484 | Budenheim | Dérivé phosphoré selon f) | Polyphosphate d'ammonium modifié avec 32,5% P et D50 de 18 $\mu$ (n> 1000) |
| Triethylphosphate | INNOCHEM | Dérivé phosphoré selon exemple 36 de WO 97/31056 | Pureté > à 99,5 |
| Melamine | ECEM | Agent expansion selon c) | Mélamine |
| Charmor® PM 40 | Perstorp | Char source selon e) | Pentaérythritol (95-100%) dipentaérythritol (0-5%) |
| APYRAL® 20 X | NABAL TEC | Composant d) | Trihydrate d'aluminium (ATH) à 99,7%, de surface spécifique (BET) 1,2 m2/g et densité de 2,4 g/cm3 et D90($\mu$m) de 80 |
| Durcal® 2 | Omya | Charges h) | Carbonate de calcium 33-47% inférieurs à 2 $\mu$m |
| Talc (Westmin® 8E) | Mondo Mineral | Charges h) | Talc (silicate de magnésium dihydroxylé) Avec 60% de taille inférieur à 2 $\mu$m |
| BYK® - A555 | BYK Chemie | Additif Débullant selon h) | Solution polymère |
| BYK® - W940 | BYK Chemie | Additif dispersant/mouillant Anti sédimentation | Polycarboxylique acide / copolymère polysiloxane IA : 130-170-: solution copolymère à 55 % ES |
| BYK® - W980 | BYK Chemie | Additif dispersant/mouillant h) | Solution à 80% de sel de polyamine amides insaturées avec polyesters acides (Ia=40, Iamine= 30) |
| Promoteur D | AKZO Nobel | promoteur de décomposition de peroxydes | Diéthylacétoacétamide |
| EUMULGIN® SML 20 | Cognis | Tensio actif selon h) | Polyoxyethylene sorbitan monolaurate |
| MHPT | Albermarle Corp. | promoteur de décomposition de peroxydes | Amine secondaire N-(2-hydroxyéthyl)-N-méthyl-para-toluidine > 95% (pm 165,24) |
| Trigonox ®21S | AKZO Nobel | Amorceur peroxyde | Tert-Butyl peroxy-2-éthylhexanoate |
| Trigonox ®C | AKZO Nobel | Amorceur peroxyde | Tert-Butyl peroxybenzoate |
| Butanox® LPT | AKZO Nobel | Amorceur peroxyde | Peroxyde de méthyléthylcétone dans le phtalate de diisobutyle / Oxygène actif : 8,4 -8,6% |
| Butanox® M50 | AKZO Nobel | Amorceur peroxyde | Peroxyde de méthyléthylcétone dans le phtalate de diméthyle Oxygène actif : 8,8 - 9,0 % |
| Accelerator® NL -23 | AKZO Nobel | Accélérateur de décomposition de peroxydes | Solution de sel de 2-ethylhexanoate de cobalt et de diméthylaniline dans un white spirit |
| Accelerator NL -51 P (Co 6%) | AKZO Nobel | Accélérateur de décomposition de peroxydes | Solution de sel de 2-ethylhexanoate de cobalt à 6% dans un ester aliphatique |

(suite)

| Référence produit | Fournisseur | Fonction technique | Nature chimique |
|---|---|---|---|
| Soligen® stabilizer C | OMG Borchers | Accélérateur de décomposition de peroxydes | Solution de sels organiques de cobalt à 21 % dans une huile minérale paraffinique |
| Moulex ®352 A | ADDITEK | Additif selon h) | Agent démoulant pultrusion |
| Stéarate de Zn 101-6 | Peter Greven | Démoulant interne | Stéarate de Zinc |
| Inhibitor NLC® 10 | AKZO Nobel | Inhibiteur | Paratertiobutylcatechol en solution à 10% dans un ester |
| Pâte blanche CV n°9557 | Cray Valley | Pâte pigmentaire blanche | Pâte colorante blanche à base 50% d'oxyde de titane dans une résine polyester insaturé |
| MAT 123 | VETROTEX | Renfort fibre verre selon i) | Mat de verre à liant poudre - Mat 450 g/m2 |
| Roving P 192 | VETROTEX | Renfort fibre verre selon i) | Fil continu 4800 Tex / 4,8 g/m |
| Roving RB 2043 | PPG | Renfort fibre verre selon i) | Fil continu texturé 5000 Tex / 5 g/m |
| *Claytone® PS3 : citée sous le nom simplifié « Claytone® » dans la partie expérimentale qui suit | | | |

## B) Tests d'évaluation générale des performances

### 1) Viscosité initiale et évolution

La viscosité des résines formulées a été mesurée à l'aide d'un rhéomètre d'Anton Paar (modèle MCR 100) avec une géométrie « cylindres concentriques » (modèle CC27 3539).

Environ 20 g de résine sont introduits jusqu'au repère dans le container du système de mesure. Le cylindre (mobile) est ensuite mis en place dans le banc de mesure. La température de la résine est régulée et maintenue à 23C $\pm$ 0.1°C.

L'échantillon stabilisé en température subit un gradient de cisaillement de 1000 s$^{-1}$ pendant 3 minutes. Le résultat est relevé à la fin des 3 minutes.

### 2) Classement M et F selon NF EN ISO 16-101

*2.1) Classement M (essai par rayonnement) selon test à l'épiradiateur à partir de l'indice q selon NF P 92-501*

L'indice q permet de positionner le matériau en classement M, suivant le tableau de classement ci-dessous, avec M0 correspondant au meilleur classement.

| Valeur | q = 0, pas d'inflammabilité effective et PCS*<2,5 MJ/kg | 0 < q < 2,5 | 2,5 ≤ q < 15 | 15 ≤ q < 50 | q ≥ 50 |
|---|---|---|---|---|---|
| Classement | M0 | M1 | M2 | M3 | M4 |
| *PCS : Pouvoir calorifique supérieur | | | | | |

*2.2) Le classement F*

2.2.1) Test d'opacité à la chambre à fumée selon NF X 10-702

Sont mesurées :

- la densité optique spécifique maximale Dm après 20 min de test
- la valeurVOF4 correspond à l'obscurcissement causé par la fumée, mesuré dans les 4 premières minutes de l'essai (voir B)3.3.2)).

2.2.2) Le test de toxicité au four tubulaire et chromatographie selon NF P 70-100

L'indice ITC est d'abord déterminé (indice de toxicité conventionnel).
On calcule enfin l'indice global des fumées IF, avec F0 correspondant au meilleur classement :

$$IF = (Dm/100) + (VOF4/30) + (ITC/2)$$

et cet indice IF permet le classement F suivant tableau ci-dessous :

| Valeur | IF ≤ 5 | 5 < IF ≤ 20 | 20 < IF ≤ 40 | 40 < IF ≤ 80 | 80 < IF ≤ 120 | IF > 120 |
|--------|--------|-------------|--------------|--------------|---------------|----------|
| Classement | F0 | F1 | F2 | F3 | F4 | F5 |

Remarque importante : dans le cadre de la norme prCEN/TS 45545-2:2008, tous les tests de toxicité ont lieu dans la chambre à fumée et non pas au four tubulaire. En effet, les gaz sont analysés directement dans la chambre par IRTF. L'échantillon, en position horizontale, est exposé à une irradiance de 50 kW/m$^2$. De plus, les NOx (oxydes d'azote) sont également pris en compte dans le calcul de l'indice ITC.

3) MARHE, CFE, ITC, VOF4 et Ds(4) selon prCEN/TS 45545-2:2008

*3.1) Détermination du MARHE au cône calorimètre selon ISO 5660-1*

Le MARHE est le maximum du ARHE (Average Rate of Heat Emission) et peut être défini comme le maximum de la vitesse moyenne de dégagement de chaleur pendant la combustion. Mathématiquement, le ARHE correspond à l'intégrale de la courbe du débit calorifique. Plus c'est faible, meilleur est le résultat.

*3.2) Détermination du CFE au panneau radian selon ISO 5658-2*

Le but de cet essai est d'évaluer la propagation latérale d'une flamme. Le paramètre qui nous intéresse est le CFE : flux critique à l'extinction en kW/m$^2$, c'est le flux énergétique incident à la surface de l'éprouvette (flux au point situé sur l'axe médian horizontal) où la flamme cesse d'avancer et peut donc s'éteindre par la suite.
La distance de propagation latérale de la flamme est corrélée à un flux énergétique déterminé au préalable tous les 5 cm lors de l'étalonnage des flux. Des repères sur le support permettent d'évaluer cette distance. Plus le CFE est élevé, meilleur est le résultat.

*3.3) Détermination du Ds(4) et du VOF4 par la chambre à fumée en position horizontale selon ISO 5659-2*

3.3.1) Densité Optique spécifique à 4 minutes Ds(4)

C'est la mesure du degré d'opacité de la fumée qui est le logarithme décimal négatif de la transmission relative T de la lumière à 4 minutes, multiplié par un facteur calculé en divisant le volume V de l'enceinte d'essai par le produit de la surface A exposée de l'éprouvette et de la longueur L du faisceau de la lumière :

$$Ds(4) = (\log_{10}(100/T) + F)*(V/A*L)$$

avec T en % et avec F, facteur dépendant de la densité optique du filtre

3.3.2) VOF4

Valeur cumulée de la densité optique spécifique dans les 4 premières minutes de l'essai :

$$VOF4 = D_s(1) + D_s(2) + D_s(3) + D_s(4)/2$$

*3.4) ITC selon prCEN/TS 45545-2:2008, selon Annexe C*

L'indice de toxicité conventionnel (ITC) se calcule par Infrarouge à Transformée de Fourrier (IRTF) directement dans la chambre à fumée. Cette technique IRTF est utilisée pour l'identification et la quantification de composés constitués par des molécules diatomiques et polyatomiques avec des liaisons hétéronucléaires.

Un faisceau lumineux est dirigé à travers la cellule d'analyse et un interférogramme est recueilli à un moment prédéfini qui correspond à x minutes à partir du début de l'essai, avec x correspondant à 4 et à 8 minutes respectivement, et ensuite les deux interférogrammes correspondants sont convertis en spectres d'absorption et à analyser.

Les concentrations de gaz présents dans l'échantillon sont calculées à partir des données de la bande d'absorption spécifique du composé, en comparaison avec les spectres correspondant à des mélanges de gaz de référence (étalons).

Le calcul de l'ITC se fait alors de la manière suivante :

$$ITC = 0,0805 * \sum_i (c_i/C_i)$$

avec i = 1 à 8 pour les 8 gaz recherchés-détectés (voir tableau ci-dessous).

$C_i$, étant la concentration mesurée en mg/m3 du gaz i et $C_i$ la concentration de référence du même gaz selon tableau de référence ci-dessous :

| Composant gazeux | $CO_2$ | CO | HBr | HCl | HCN | HF | $NO_X$ | $SO_2$ |
|---|---|---|---|---|---|---|---|---|
| Concentration de référence « Ci » mg/m³ | 72000 | 1380 | 99 | 75 | 55 | 25 | 38 | 262 |

Dans le cas des mesures des essais présentés, la mesure ITC retenue a été celle réalisée à 8 minutes, comme représentant le résultat le plus défavorable parmi les 2 mesures réalisées.

Plus ce paramètre ITC est élevé, cela signifie que plus le matériau brûle et fume, avec risque d'intoxication.

*4) Critères HL1, HL2 et HL3 selon l'exigence R1 de la norme prCEN/TS 45545-2:2008*

| Méthode | Paramètre mesuré (unités) | HL1 | HL2 | HL3 |
|---|---|---|---|---|
| ISO 5658-2 | CFE (kW/m²) | $\geq 20$ | $\geq 20$ | $\geq 20$ |
| ISO 5660-1 | MARHE (kW/m²) | $\geq 90$ | $> 60$ et $\leq 90$ | $\geq 60$ |
| EN ISO 5659-2 | Ds(4) | $> 300$ et $\leq 600$ | $> 150$ et $\leq 300$ | $\leq 150$ |
| EN ISO 5659-2 | VOF4 (min) | $> 600$ et $\leq 1200$ | $> 300$ et $\leq 600$ | $\leq 300$ |
| EN ISO 5659-2 | ITC | $> 0,9$ et $\leq 1,2$ | $> 0,75$ et $\leq 0,9$ | $\leq 0,75$ |

*5) Classement IOL (Indice limite d'Oxygène) selon ENISO 4589-2*

Selon l'exigence R27 de la norme prCEN/TS 45545-2:2008 : HL1 si $\geq 28$, HL2 si $\geq 28$ et HL3 si $\geq 32$.

**C) Préparation, mise en oeuvre et évaluation des performances** : compositions thermodurcissables selon l'invention et compositions de référence pour comparaison

1) Compositions pour stratifiés

*1.1) Préparation des formulations des exemples A, B, C, G, K et I*

1.1.1) Préparation de la « pâte mère » de Claytone® à 6% en masse dans le styrène

3,6 p de Claytone (Claytone® PS3) sont dispersés dans 56,4 p de styrène monomère, la Claytone (argile/bentonite traitée avec un sel d'ammonium quaternaire) est ensuite exfoliée par une agitation énergique (haut cisaillement) à l'aide d'une pâle défloculeuse de 5 cm de diamètre et à 2000 tr/min pendant 15 minutes. Le mélange obtenu doit être visqueux et consistant.

Préparation des mélanges (formulations)

A la pâte mère, préparée en C)1.1.1), sont ajoutés dans un ordre préétabli et sous constante agitation (pâle défloculeuse de diamètre 5 cm à 800 tr/min) les constituants suivants :

| Composant | UPEX 081341 | BDDMA | BYK® 980 | MHPT | NLC ® 10 | Pâte blanche CV n°9557 | Styrène |
|---|---|---|---|---|---|---|---|
| Quantité (p) | 290* | 50 | 7 | 2 | 1 | 15 | 55 |
| *Dont 186 p de résine sèche a) et 104 p de styrène* | | | | | | | |

Les charges minérales et organiques sont introduites dans un deuxième temps et toujours sous agitation selon le tableau suivant :

| Composant | APYRAL® 20X* | CHARMOR® PM40 | Mélamine | FR CROS® 484 |
|---|---|---|---|---|
| Quantité (p) | 195 | 50 | 100 | 195 |
| *195 p APYRAL® 20X ou carbonate de Ca ou silicate de Mg (talc) en fonction des essais* | | | | |

Après 10 minutes d'agitation, le mélange homogène et fluide est de couleur blanchâtre.

*1.2) Mise en oeuvre et réticulation, recuit (conditions)*

A la composition (formule) préparée selon le point C)1.1), on ajoute 2 p d'accélérateur (Co 6% ; NL 51 P de AKZO) et on mélange de manière suffisante pour obtenir une dispersion homogène de cet accélérateur, avant l'addition de 15 p de peroxyde (PMEC ; Butanox M50 de AKZO) suivi de nouveau par un mélange homogène de la pâte pour obtenir une dispersion également homogène de ce peroxyde, pour initier la réticulation radicalaire de la formule.
Dans ces conditions, le temps de gel (100 g en pot) de la résine à 23°C est de 20 ± 5 minutes. Cette mise en oeuvre a été utilisée pour les composition comprenant un polyester insaturé ou un mélange de polyester insaturé avec un vinyl ester (50/50). Dans le cas particulier de compositions à base de vinyl esters, ledit accélérateur est remplacé par 5 p de NL 23 d'AKZO et ledit péroxyde par la même quantité du péroxyde Butanox LPT d'AKZO.

*1.3) Préparation et conditionnement des éprouvettes testées*

Les éprouvettes testées selon prCEN/TS 45545-2:2008 résultent de l'imprégnation de trois MAT 123 (à liant poudre) par la formule préparée selon point C)1.2). Le composite stratifié final contient 20% ± 3% de verre (MAT 123).

1.3.1) Préparation des stratifiés

On dépose sur un film de polyester téréphtalate (MYLAR^R) la quantité de résine appropriée (préparée en C)1.2)) et on l'étale sur une surface d'environ 40 x 40 cm. Un MAT 123 prédécoupé de 40 x 40 cm est ensuite déposé sur le lit de résine. L'imprégnation et l'élimination des bulles d'air emprisonnées sont facilitées par l'emploi d'un rouleau « débulleur » bien connu dans le métier de la stratification.
Cette opération est reconduite de la même façon pour les 2 MAT suivants.
La quantité de résine est ajustée pour bien mouiller le renfort fibré.

1.3.2) Préparation des éprouvettes

prCEN/TS 45545-2:2008

| | |
|---|---|
| ISO 5660-1 (MARHE) | 5 éprouvettes de 10 x 10 cm x épaisseur |
| ISO 5658-2 (CFE) | 3 éprouvettes de 80 x 15,5 cm x épaisseur |

(suite)

ISO 5659 -2 (TTCNOF4/Ds (4))     5 éprouvettes de 7,6 x 7,6 cm x épaisseur

NF EN ISO 16-101

NF P 92-501 (Classement M)     5 éprouvettes de 40 x 30 cm x épaisseur
NF X 10-702 (Opacité)     5 éprouvettes de 7,6 x 7,6 cm
NF P 70-100 (toxicité)     2 x 1g

1.3.3) Recuit des éprouvettes

24 heures à température ambiante, puis 4 h à 120°C en étuve ventilée.

*1.4) Compositions formulations) préparées et résultats*

1.4.1) Exemples A, B, C, G, K et I

1.4.1.1) Préparation des formulations

Six formulations ont été préparées pour un poids total de 1020 parties selon exemples A, B, C, G, K et I et comprenant les composants suivants en quantités identiques (constantes) :

| Composant | UPEX 081341 | BDD MA | Styrène ajustage | Claytone® ** | BYK ® W980 | MHPT | NLC® 10 | Pâte blanche CV 9557 |
|---|---|---|---|---|---|---|---|---|
| Quantité (p) | 290* | 50 | 55 | 60** | 7 | 2 | 1 | 15 |
| *dont 186 p de résine sèche et 104 p de styrène* <br> *** dont 56,4 p de styrène et 3,6 p de Claytone®* | | | | | | | | |

L'ensemble de ces constituants représente 480 p. Les composants en quantités variables pour chaque exemple A, B, C, G, K et I figurent au tableau 2 ci-dessous (pour 290 p de résine UPEX 081341).

Tableau 2 : Composants complémentaires avec quantités variables pour formulations des exemples A, B, C, G, K et I

| Exemples | A (invention) | B (invention) | C (invention) | G (invention) | K (invention) | I (comparatif) |
|---|---|---|---|---|---|---|
| Mélange suivant C1.4.1) | 480 | 480 | 480 | 480 | 480 | 480 |
| FR CROS® 484 | 195 | 195 | 195 | 135 | 305 | 0 |
| CHARMOR® PM 40 | 50 | 50 | 50 | 35 | 78 | 0 |
| ATH APYRAL® 20X | 195 | 0 | 0 | 300 | 0 | 540 |
| Talc | 0 | 195 | 0 | 0 | 0 | 0 |
| Carbonate de Calcium | 0 | 0 | 195 | 0 | 0 | 0 |
| Mélamine | 100 | 100 | 100 | 70 | 157 | 0 |

1.4.1.2) Mesure des performances

Selon ISO 5660-1 sur stratifiés préparés selon description à C)1.3.1) à C)1.3.3).

EP 2 358 797 B1

| Exemples | A (invention) | B (invention) | C (invention) | G (invention) | K (invention) | I (comparatif) |
|---|---|---|---|---|---|---|
| Viscosité* à 1000 s$^{-1}$ (dPa.s) | 3,15 | 8,2 | 3,45 | 2,7 | 4,6 | 1,95 |
| Performances | | | | | | |
| MARHE (kW/m$^2$) | 70-52-49 | 48-34 | 59-44 | 79,5-83 | 25-33 | 102 |
| Moyenne MARHE (kW/m$^2$) | 57 | 41 | 51 | 81 | 29 | 102 |
| Classement selon prCEN/TS 45545-2:2008 suivant critère MARHE | HL3 | HL3 | HL3 | HL2 | HL3 | HL1 |
| *Mesure sur rhéomètre à cylindres concentriques selon mode opératoire décrit en B1* | | | | | | |

1.4.2) Exemples D, E et F (voir tableau 3)

1.4.2.1) Préparation des formulations

Trois formulations ont été préparées pour un poids total de 1000 parties comprenant les composants suivants en quantités identiques (constantes) :

| Composant | UPEX 081341 | Claytone ® 6% dans styrène | BYK ® W980 | MHPT | NLC ® 10 | Pâte Blanche CV 9557 | APYRAL ® 20X | FR CROS ® 484 | Char mor® PM40 | mélamine |
|---|---|---|---|---|---|---|---|---|---|---|
| Quantité (p) | 290* | 60** | 7 | 2 | 1 | 15 | 195 | 195 | 50 | 100 |

* dont 186 p de résine sèche et 104 p de styrène
** dont 56,4 p de styrène et 3,6 p de Claytone®

L'ensemble de ces constituants représente 915 p.

Les composants en quantités variables pour chaque exemple (D), (E) et (F) figurent au tableau 3 ci-dessous.

Tableau 3 : Composants complémentaires avec quantités variables pour formulations des exemples (D), (E) et (F)

| Exemples | D (invention) | E (invention) | F (invention) |
|---|---|---|---|
| Mélange suivant 1.4.2) | 915 | 915 | 915 |
| BDDMA | 0 | 30 | 50 |
| Styrène dilution (ajustement) | 85 | 55 | 35 |

1.4.2.2) Mesure des performances (ISO 5660-1)

Selon ISO 5660-1, sur stratifiés préparés selon description à C)1.3.1) à C)1.3.3)

| Exemples | D (invention) | E (invention) | F (invention) |
|---|---|---|---|
| Performances | | | |
| Moyenne MARHE kW/m$^2$ | 89 | 77 | 63 |
| Classement prCEN/TS 45545-2:2008, suivant MARHE | HL2 | HL2 | HL2 |

1.4.3) Exemples M sans renfort verre) et N (avec renfort verre)

1.4.3.1) Préparation des formulations

Deux formulations ont été préparées pour un poids total de 1035 parties en poids selon exemples M et N et comprenant les composants suivants en quantités identiques (constantes) :

| Composant | Upex 081341 | BD DMA | Styrène ajustage | Claytone ® 6% dans styrène | Charmor ® PM40 | FR CROS® 484 | ATH Apyral ® 20X | Méla mine | BYK ® W980 | MHPT | NLC ® 10 | Pâte CV 9557 |
|---|---|---|---|---|---|---|---|---|---|---|---|---|
| Quantité | 290* | 50 | 70 | 60** | 50 | 195 | 195 | 100 | 7 | 2 | 1 | 15 |

*dont 186 p de résine sèche et 104 p de styrène
** dont 56,4 p de styrène et 3,6 p de Claytone®

1.4.3.2) Préparation sans fibre de verre (M) et avec fibres de verre (N)

a) Préparation de M

La formule décrite en C)1.4.3.1) et préparée selon le point C)1.2) est coulée entre 2 plaques de verre de 35 x 30 cm préalablement cirées et lustrées dont l'interface de 4 mm est assurée par des entretoises métalliques et l'étanchéité par des joints élastomériques.

La pièce est libérée des plaques de verre après réticulation pendant 24 h à l'ambiante. Un recuit est réalisé suivant procédure en C)1.3.3). Ensuite, 3 éprouvettes de 15 x 1 x 0,4 cm sont découpées dans la plaque coulée pour être évaluées en IOL selon EN ISO 4589-2

b) Préparation de N

C'est la même procédure que M, pour le moulage et préparation d'échantillons à tester, sauf que la formulation comprend des fibres de verre, avec une préparation de la formulation réalisée selon description aux points C)1.3.1) à C)1.3.3).

1.4.3.3) Mesure des performances

1.4 3.3.1) Evolution de la viscosité du mélange (ou composition) M au stockage

Le test est réalisé en prélevant l'échantillon de 20 g, sur une quantité de 20 kg de composition M, conditionnée dans un container métallique de 25 kg, en salle climatisée à $23 \pm 1°C$. Mesure de la viscosité : déjà décrite au point B.1). Résultats: voir tableau 4 ci-dessous.

Tableau 4 : évolution de la viscosité au stockage pour composition M

| Durée de stockage (jours) | Viscosité (dPa.s) à $23 \pm 1°C$/ 1000 $s^{-1}$ | % Variation (vs viscosité départ) |
|---|---|---|
| 0 | 2,6 | 0 |
| 26 | 2,8 | 7,8 |
| 71 | 2,9 | 11,5 |

1.4.3.3.2) Mesure de l'IOL (Indice limite d'Oxygène) selon EN ISO 4589-2 pour M et N

Performances anti-feu en termes d'Indice Limite en Oxygène (IOL) en % d'oxygène : M: 65-66% et N: 61-62%

Selon l'exigence R27 de la norme prCEN/TS 45545-2:2008 pour le niveau HL3, l'IOL doit être supérieur ou égal à 32. C'est le cas pour les deux essais examinés M et N.

1.4.4) Comparaison par rapport à l'état de l'art (WO 97/31056) : voir tableau 5

1.4.4.1) Formulation préparée (O)

Préparation suivant mode opératoire décrit en C)1.1.3) à C)1.3).

Tableau 5 : comparaison vs état de l'art

| REF | Exemple n°36 selon WO 97/31056 | Exemple O, selon invention |
|---|---|---|
| Référence résine UP | UPEX 081341 | UPEX 081341 |
| Quantité résine diluée | 340* | 290** |
| BDDMA | 0 | 50 |
| Styrène d'ajustage | 100 | 70 |
| Claytone® 6% | 0 | 60*** |
| FR CROS® 484 | 0 | 195 |

(suite)

| REF | Exemple n°36 selon WO 97/31056 | Exemple O, selon invention |
|---|---|---|
| CHARMOR® PM 40 | 0 | 50 |
| ATH, APYRAL® 20X | 0 | 195 |
| Triéthyl phosphate | 50 | 0 |
| Mélamine | 200 | 100 |
| Carbonate de Ca | 400 | 0 |
| BYK® W 980 | 7 | 7 |
| MHPT | 2 | 2 |
| NLC®-10 | 0 | 1 |
| Pâte colorante blanche CV n° 9557 | 0 | 15 |
| Total hors système d'amorçage | 1099 | 1035 |
| NL51-P | 2 | 2 |
| PMEC | 15 | 15 |
| Stratification | | |
| % verre (3 MATS 123) | Environ 20% | Environ 20% |

*Dont 218 p de résine sèche a) et 122 p de styrène*
*** Dont 186 p de résine sèche a) et 104 p de styrène*
**** Dont 56,4 p de styrène et 3,6 p de Claytone®*

1.4.4.2) Mesure des performances : voir tableau ci-dessous

| REF | Exemple n°36 selon WO 97/31056 | Exemple O selon invention |
|---|---|---|
| MARHE (kW/m$^2$) | 142 | 59 |
| Classement prCEN/TS 45545-2:2008 suivant MARHE | HL1 | HL3 |

1.4.5) Exemple J en pultrusion

1.4.5.1) Préparation de la formulation

Une formulation a été préparée comprenant les composants suivants en quantités suivantes :

| Composant | BD DMA | Clay tone ® 6% | Byk ® W980 | NLC® 10 | Pâte CV 9557 | FR CROS ® 484 | Char Mor ® PM40 | ATH Apyral ® 20X | Méla mine | Moulex ® 352A | Stéarate Zn | Trigo nox® 21S | Trigonox ® C |
|---|---|---|---|---|---|---|---|---|---|---|---|---|---|
| Quantité (p) | 50 | 60* | 7 | 1 | 15 | 195 | 50 | 195 | 100 | 7 | 10 | 2 | 10 |

* Dont 56,4 p de styrène et 3,6 p de Claytone®

L'ensemble de ces constituants représente 702 p.

Les composants complémentaires et quantités correspondantes figurent au tableau 6 ci-dessous, pour la formulation J.

Tableau 6 : Composants de la formulation J

| Référence | J (invention) |
|---|---|
| Mélange selon C 1.4.5.1) | 702* |
| Résine UPEX 081341 (diluée) | 290** |
| Styrène d'ajustage | 70 |
| Total diluant b) | 280,4 |
| MHPT | 2 |
| Poids total de la composition | 1064 |
| *Dont 50 p de BDDMA et 56,4 de Styrène de la solution de Claytone®* <br> ***Dont 186 p de résine sèche a) et 104 p de styrène* | |

1.4.5.2) <u>Préparation des pultrudés</u>

La formulation J préparée selon C)1.4.5.1) est prête à l'emploi et il n'est pas nécessaire d'ajouter d'accélérateur (type Cobalt 6%).

Les peroxydes Trigonox 21 S et Trigonox C, présents dans le mélange, déclenchent le processus de réticulation pour une température au moins supérieure à 60°C, par passage à travers une filière chauffée.

Suivant un processus continu, les fibres de verre 16 brins Roving P192 et 12 brins Roving C 1698 passent dans un bac contenant la résine pour y être imprégnées. L'ensemble passe ensuite dans un moule chauffé à 140°C, à travers une filière de 5 cm x 0,5 cm. La résine réticule et durcit pendant son parcours dans le moule. Le profilé plat sort du moule en continu à la vitesse de 0,5 m/s. Le taux de réticulation est supérieur à 95% à ce stade.

1.4.5.3) <u>Mesure de l'IOL (Indice limite d'Oxygène) selon EN ISO 4589-2</u>

Performances anti-feu en termes d'Indice Limite en Oxygène (IOL) en % d'oxygène :

| REF | J |
|---|---|
| Indice Limite en Oxygène (IOL) en % $O_2$ (vol) | 52-53 |

Selon l'exigence de la norme prCEN/TS 45545-2:2008 pour HL3, l'IOL doit être égal ou supérieur à 32.

1.4.6) <u>Formule de l'exemple O avec face côté moule (brillant) et face côté air (mat)</u>

1.4.6.1) <u>Préparation des formulations</u>

La formule O déjà décrite en C)1.4.4) est préparée suivant le mode opératoire C)1.1) à C)1.3) et a fait l'objet d'une évaluation complète suivant prCEN/TS 45545-2:2008 et NF EN ISO 16-101.

1.4.6.2) <u>Mesure des performances prCEN/TS 45545-2:2008 et NF EN ISO 16-101</u>

Tableau 7 : performances de la formule O

| Exemple O (invention) | | | Face côté moule | Face côté air |
|---|---|---|---|---|
| Performances EN 45545 | | Exigence R1 | | |

(suite)

| Exemple O (invention) | | | Face côté moule | Face côté air |
|---|---|---|---|---|
| ISO 5660-1 prCEN/TS 45545-2:2008 | MAHRE (kW/m$^2$) | HL2 60 < MARHE < 90 HL3 MAHRE < 60 | 62,0 (HL2) | 59,9 (HL3) |
| ISO 5658-2 | CFE (kW/m$^2$) | Mini 20 | 22,7 (HL3) | 28,3 (HL3) |
| EN ISO 5659-2 | Ds(4) | HL2 Maxi 300 HL3 Maxi 150 | 115 (HL3) | 85 (HL3) |
| EN ISO 5659-2 | VOF4 | HL2 Maxi 600 HL3 Maxi 300 | 178 (HL3) | 175 (HL3) |
| EN ISO 5659-2 prCEN/TS 45545-2:2008 | ITC à 4 min | HL2 Maxi 0,9 HL3 Maxi 0,75 | 0,09 (HL3) | 0,09 (HL3) |
| EN ISO 5659-2 prCEN/TS 45545-2:2008 | ITC à 8 min | HL2 Maxi 0,9 HL3 Maxi 0,75 | 0,31 (HL3) | 0,35 (HL3) |
| Performances NF EN ISO 16-101 | | | | |
| NF P 92-501 | Classement M | M1 0 < q < 2,5 | q = 0,9 (M1) | q = 1,0 (M1) |
| NF X 10-702 / NF X 70-100 | Classement F | F1 5 < IF < 20 | IF = 11 (F1) | IF = 13 (F1) |

## 2) Compositions de gel coats intumescents

### 2.1) Préparation du gel coat intumescent

A la résine UPEX 081341 sont ajoutés dans un ordre préétabli et sous constante agitation (pâle défloculeuse de diamètre 5 cm à 1200 tr/min) les constituants suivants : BYK® W 980, BYK® A 555, NL 51-P, Soligen® stabilizer C, Promoteur D, Inhibiteurs, Eumulgin® SML20.

Les charges minérales et organiques ainsi que le styrène d'ajustement sont introduits dans un deuxième temps et toujours sous agitation dans l'ordre suivant : HDK® N20, CHARMOR® PM 40, Mélamine, FR CROS® 484, Styrène APYRAL® 20X et éventuellement, si présente, la pâte colorante blanche CV n° 9557. Après 10 minutes d'agitation, on obtient un mélange homogène et fluide de couleur blanchâtre. Les composants à quantités variables des exemples P, Q et R figurent au tableau 8 ci-dessous.

### 2.2) Mise en oeuvre et réticulation

Au gel coat bien homogénéisé préparé selon C)2.1), on ajoute 18 p de peroxyde PMEC (Butanox® M50 de AKZO) pour initier la réticulation radicalaire du gel coat.

Dans ces conditions, le temps de gel (200 g en pot) du gel coat à 25°C est de 10 ± 3 minutes.

Le gel coat est ensuite appliqué sur un moule en verre préalablement ciré à l'aide d'un pistolet à godet et à une épaisseur de gel coat, préalablement déterminée (voir ci-dessous tableaux 8 et 9).

### 2.3) Préparation et conditionnement des éprouvettes testées

La stratification est réalisée 1 heure après l'application du gel coat décrit précédemment. Celle-ci est effectuée avec 3 mats à liant poudre de 450g/m2 imprégnés d'Enydyne® C40-8161CT et accélérée avec 0,15% en poids de NL 51P d'AKZO (solution d'octoate de Cobalt à 1% de Co) et catalysée avec 1,2% en poids de Butanox® M50, avec un ratio pondéral fibre/résine de 20/80. L'imprégnation et l'élimination des bulles d'air emprisonnées sont facilitées par l'emploi d'un rouleau « débulleur » connu dans le métier de la stratification.

Après complète réticulation, les éprouvettes ainsi réalisées sont maintenues à une température entre 20 et 25°C pendant 24 heures avant d'être post-cuites (recuit) pendant 4 heures à 120°C et avant d'être évaluées suivant la norme prCEN/TS 45545-2:2008.

Essais réalisés : voir tableau 8

P : Formulation sans ATH, avec 2 épaisseurs de gel coat : 600 et 2000 microns

Q : Formulation avec ATH, avec 2 épaisseurs de gel coat : 600 et 2000 microns

R : Formulation avec ATH et sans pâtes colorantes, avec 1 épaisseur de gel coat : 600 microns

Tableau 8 : compositions de gel coats P, Q et R

| REF | P | Q | R |
|---|---|---|---|
| Référence résine a) diluée | Upex 081341 | Upex 081341 | Upex 081341 |
| Quantité résine a) diluée | 100* | 100* | 100* |
| Styrène ajustement | 40 | 40 | 13 |
| BDDMA | 0 | 0 | 0 |
| FR CROS® 484 | 52 | 67 | 67 |
| CHARMOR® PM 40 | 35 | 17 | 17 |
| APYRAL® 20X (ATH) | 0 | 67 | 67 |
| Mélamine | 52 | 34 | 34 |
| BYK® W 980 | 0 | 2,4 | 2,4 |
| BYK® A 555 | 0,5 | 0,5 | 0,5 |
| HDK®N20 | 2,2 | 2,2 | 2,2 |
| pâte colorante blanche CV n° 9557 | 28,3 | 33,1 | 0 |
| NL 51-P | 0,6 | 0,6 | 0,6 |
| Soligen® stabilizer C | 0,06 | 0,06 | 0,06 |
| Promoteur D | 0,15 | 0,15 | 0,15 |
| Inhibiteurs | 0,22 | 0,22 | 0,22 |
| Eumulgine ®SML20 | 0,22 | 0,22 | 0,22 |
| TOTAL | 311,25 | 364,45 | 304,35 |
| Substrat stratifié | C40-8161CT | C40-8161CT | C40-8161CT |
| Epaisseur gel coat $\mu$m | 600 et 2000 | 600 et2000 | 600 |
| V5 (mPa.s)** | 10760 | 5040 | 20320 |
| V50 (mPa.s)** | 2396 | 1420 | 7028 |
| V5/50 | 4,49 | 3,55 | 2,89 |

*Dont 64,1 p de résine sèche a) et 35,9 p de styrène*

*\*\* V5 et V50: viscosité Brookfield DV II à 5 et 50 tours/min à 25°C avec Mobile 4, pour les compositions de gel coats*

Tableau 9 : Résultats MARHE en fonction de la composition et de l'épaisseur des gel coats P, Q, R

| | Epaisseur ($\mu$m) | ATH | Pâte colorante | MARHE (kW/m$^2$) | Classement R1 prCEN/TS 45545-2:2008 |
|---|---|---|---|---|---|
| Essais | | | | | |
| P | 600 | Non | Oui | 41,5 | HL3 |
| P | 2000 | Non | Oui | 34,2 | HL3 |
| Q | 600 | Oui | Oui | 44,5 | HL3 |
| Q | 2000 | Oui | Oui | 38,1 | HL3 |

(suite)

|  | Epaisseur ($\mu$m) | ATH | Pâte colorante | MARHE (kW/m$^2$) | Classement R1 prCEN/TS 45545-2:2008 |
|---|---|---|---|---|---|
| Essais |  |  |  |  |  |
| R | 600 | Oui | Non | 56,8 | HL3 |

3) Essais supplémentaires avec des compositions pour stratifiés

*3.1) Préparation des formulations des exemples T, U, V, W, X, Y, Z à nature de résine a) variable et à taux constant de résine a) (en matière sèche) : voir compositions au tableau 10*

La préparation est réalisée suivant le mode opératoire décrit en C)1.1) à C)1.3).

Tableau 10 : Compositions T, U, V, W, X, Y, Z à nature variable de résine a)

| Références | T | U | V | W*** | X*** | Y | Z |
|---|---|---|---|---|---|---|---|
| UPEX 081341 (diluée) | 290* |  |  |  |  | 145* | 145* |
| NORSODYNE® G 703(diluée) |  | 334* |  |  |  |  |  |
| NORSODYNE® S 86407 TB(diluée) |  |  | 285* |  |  |  |  |
| EPOVIA® OPTIMUM KRF 1001 (diluée) |  |  |  | 317* |  | 158* |  |
| EPOVIA® OPTIMUM KRF 1051 (diluée) |  |  |  |  | 265* |  | 133* |
| *Dont total de résine sèche a)* | *186* | *186* | *186* | *186* | *186* | *186* | *186* |
| *Dont styrène de la résine* | *104* | *148* | *99* | *131* | *79* | *117* | *92* |
| Styrène ajustage | 70 | 26 | 75 | 43 | 95 | 57 | 82 |
| *Total styrène (de résine + ajustage+ Claytone®)* | *230,4* | *230,4* | *230,4* | *230,4* | *230,4* | *230,4* | *230,4* |
| Claytone® 6% | 60** | | | | | | |
| BDDMA | 50 | | | | | | |
| BYK® 980 | 7 | | | | | | |
| BYK® 940 | 5 | | | | | | |
| MHPT | 2 | | | | | | |
| Pâte blanche CV n° 9557 | 15 | | | | | | |
| APYRAL® 20X | 195 | | | | | | |
| CHARMOR® PM 40 | 50 | | | | | | |
| Mélamine | 100 | | | | | | |
| FR CROS® 484 | 195 | | | | | | |
| Total formulation | 1039 | 1039 | 1039 | 1039 | 1039 | 1039 | 1039 |

*\* Quantité de résine diluée pour un total de 186 p de résine sèche a) (pour Y et Z : mélanges 50/50 de polyester insaturé UP et de vinyl esters)*

*\*\* Dont 3, 6 p de Claytone®, (Claytone® PS3) et 56,4 p de styrène*

*\*\*\* W et X ne sont pas des compositions de la présente invention*

*3.2) Résultats des performances des stratifiés à base des formulations T, U, V, W, X, Y, Z (selon ISO 5660-1): voir Tableau 11*

Tableau 11 : Performance d'intumescence en fonction de la nature de la résine a)

| Exemples | T | U | V | W | X | Y | Z |
|---|---|---|---|---|---|---|---|
| Performances | | | | | | | |
| MARHE (kW/m$^2$) | 71,1-67,2 | 105,1-105,5 | 114,6-110,3 | 102,5-93,3 | 67,3-69,0 | 100,9-98,4 | 81,4-84,3 |
| Moyenne MARHE | 69,1 | 105,3 | 112,5 | 97,9 | 68,2 | 99,6 | 82,9 |
| Classement selon critère MARHE, selon prCEN/TS 45545-2:2008 | HL2 | HL1 | HL1 | HL1 | HL2 | HL1 | HL2 |

**Revendications**

1. Composition thermodurcissable, **caractérisée en ce qu'**elle est exempte de tout additif halogéné et de toute structure halogénée dans ses composants et **en ce qu'**elle comprend :

   a) pour 100 parties en poids d'une résine, poids exprimé en poids de résine sèche, comprenant :

   a1) au moins un polyester insaturé, ayant un indice d'acide inférieur à 10, ou une combinaison de a1) avec a2) au moins une résine vinyl ester, de préférence sélectionnée parmi les résines vinyl esters dérivées des résines formo-phénoliques époxydées,

   b) 40 à 200 parties en poids d'au moins un diluant réactif sélectionné parmi les monomères éthyléniquement insaturés copolymérisables avec ladite résine,
   c) 20 à 110 parties en poids d'au moins un agent d'expansion, par décomposition thermique, agent sélectionné parmi : mélamine et ses dérivés, guanidine, glycine, urée, triisocyanurates, azodicarbonamide, de préférence parmi la mélamine et ses dérivés et plus préférentiellement la mélamine
   d) 0 à 250 parties en poids de trihydrate d'Aluminium
   e) 10 à 80 parties en poids d'au moins un agent précurseur de carbonisation sélectionné parmi : les polyols multifonctionnels sucres, amidon, fécule de pomme de terre, le pentaérythritol (PET), et/ou dérivés de PET et/ou érythritol et/ou sorbitol
   f) 50 à 200 d'au moins un composé parmi : au moins un dérivé phosphoré et/ou au moins un dérivé d'acide borique
   g) en option, au moins un oxyde métallique
   h) en option, autres additifs et charges
   i) en option, des renforts à base de fibres naturelles ou synthétiques et tissus correspondants

   et **en ce que**, ledit polyester a1) est à base d'un composant acide constitué d'au moins 60% en mol d'acide et/ou anhydride maléique et d'un composant polyol constitué d'au moins 70% en mol de propylène glycol, avec le restant éventuel étant sélectionné parmi le dipropylène glycol et/ou l'éthylène glycol et/ou le diéthylène glycol et/ou le néopentyl glycol et/ou le 2-Me propanediol et/ou butanediols et/ou pentane diols et/ou hexanediols.

2. Composition thermodurcissable selon la revendication 1, **caractérisée en ce qu'**elle a une viscosité inférieure à 1500 mPa.s, viscosité mesurée à 23°C sous un gradient de cisaillement de 1000 s$^{-1}$.

3. Composition thermodurcissable selon la revendication 1 ou 2, **caractérisée en ce que** ledit diluant réactif b) comprend :

   b1) un monomère comprenant :

   b1a) au moins un monomère vinyl ou allyl aromatique choisi parmi : le styrène et/ou vinyl toluènes et/ou tert-butyl styrène et/ou divinyl benzènes, divinyl toluènes et/ou diallyl phtalates et éventuellement,
   b1b) au moins un monomère (méth)acrylique monofonctionnel et en option

   b2) au moins un monomère (méth)acrylique multifonctionnel, comportant au moins 2 fonctions (méth)acryliques.

4. Composition thermodurcissable selon la revendication 3, **caractérisée en ce que** le taux en poids de b2) est de 2 à 60% du poids total du composant b).

5. Composition thermodurcissable selon la revendication 3 ou 4, **caractérisée en ce que** ledit monomère (méth)acrylique multifonctionnel b2) est sélectionné parmi : butane diol di(méth)acrylate (BDD(M)A), butane glycol (1,3) di(méth)acrylate (BGD(M)A), triméthylol propane tri(méth)acrylate (TMPT(M)A), éthylène glycol di(méth)acrylate (EGD(M)A), diéthylène glycol di(méth)acrylate (DEGD(M)A), hexaméthylène glycol di(méth)acrylate (HMD(M)A, pentaérythritol tetra(méth)acrylate (PETT(M)A, néopentyl glycol di(méth)acrylate (NPGD(M)A).

6. Composition thermodurcissable selon l'une des revendications 3 à 5, **caractérisée en ce que** ledit monomère (méth)acrylique multifonctionnel b2) est le butanediol 1,4 di(méth)acrylate (BDD(M)A).

7. Composition thermodurcissable selon l'une des revendications 2 à 6, **caractérisée en ce que** ledit monomère (méth)acrylique multifonctionnel b2) est méthacrylique.

8. Composition thermodurcissable selon l'une des revendications 1 à 7, **caractérisée en ce que** ledit polyester insaturé a1) est à base d'un composant acide constitué de 60 à 100% en mol d'acide et/ou d'anhydride maléique, le restant par rapport à 100% étant l'acide ou anhydride ortho- et/ou iso- phtalique.

9. Composition thermodurcissable selon l'une des revendications 1 à 8, **caractérisée en ce que** le composant polyol dudit polyester est constitué de 70 à 100% mol de propylène glycol (PG).

10. Composition thermodurcissable selon l'une des revendications 1 à 9, **caractérisée en ce que** ledit polyester a1) est à base d'un composant acide constitué de 100% en mol d'acide et/ou anhydrique maléique et d'un composant polyol constitué de 100% en mol de PG.

11. Composition thermodurcissable selon l'une des revendications 1 à 10, **caractérisée en ce que** la dite résine a) est sélectionnée parmi lesdits polyesters a1).

12. Composition thermodurcissable selon l'une des revendications 1 à 10, **caractérisée en ce que** ladite résine a) est sélectionnée parmi les combinaisons d'au moins un polyester a1) avec au moins un vinyl ester a2).

13. Composition thermodurcissable selon l'une des revendications 1 à 12, **caractérisée en ce qu'**elle comprend un composant d) tel que défini selon la revendication 1, à un taux en poids allant jusqu'à 175 parties pour 100 parties de ladite résine a).

14. Procédé de préparation d'une composition thermodurcissable telle que définie selon l'une des revendications 1 à 13, **caractérisé en ce qu'**il comprend l'étape de mélange d'une composition qui comprend ou est constituée des dits composants a) et b) avec lesdits composants c) à i).

15. Utilisation d'une composition thermodurcissable telle que définie selon l'une des revendications 1 à 13 comme composition de moulage pour pièces composites ou composition d'application pour stratifiés ou composition de colle structurale ou de mastic ou de béton polyester ou de gel coat ou de top coat.

16. Utilisation selon la revendication 15, comme composition de moulage pour pièces composites sélectionnée parmi : BMC, AMC, CIC.

17. Utilisation selon la revendication 15, comme composition d'application pour stratifiés et pièces composites par voie de pultrusion ou par coulée ou par projection ou par contact ou par infusion ou par centrifugation ou par injection/compression (RTM) ou par enroulement filamentaire ou par imprégnation continue.

18. Utilisation selon la revendication 15, comme composition de colle structurale pour l'assemblage de pièces composites.

19. Utilisation selon la revendication 15, comme composition de gel coat ou de top coat, pigmentée ou non pigmentée.

20. Utilisation d'une composition thermodurcissable telle que définie selon l'une des revendications 1 à 13, **caractérisée en ce qu'**elle concerne la fabrication et/ou l'utilisation de pièces composites moulées ou d'autres pièces composites stratifiées ou de colles structurales ou de mastics ou de gel coats ou de top coats, dans le domaine de la résistance au feu.

21. Utilisation selon la revendication 20, **caractérisée en ce qu'**elle concerne des applications dans le domaine du transport, dans le domaine du bâtiment, dans le domaine du génie civil et des travaux publics, tels que ponts et tunnels ou le domaine de loisirs et mobiliers urbains.

22. Utilisation selon la revendication 20 ou 21, **caractérisée en ce que** lesdites fabrication et utilisation concernent le transport ferroviaire.

23. Pièces composites moulées ou stratifiées, revêtements, applications de colles structurales ou de mastics ou de gel coats ou de top coats, **caractérisés en ce que** lesdites pièces ou lesdits revêtements ou applications de colles ou de mastic ou de gel coats ou de top coats résultent de la réticulation d'au moins une composition thermodurcissable telle que définie selon l'une des revendications 1 à 13.

24. Pièces composites moulées ou stratifiées, revêtements ou applications telles que définies selon la revendication 23, **caractérisées en ce qu'**elles ont un comportement anti-feu intumescent remplissant au moins le critère HL2 selon l'exigence R1 de la norme prCEN/TS 45545-2:2008.

25. Pièces composites moulées ou stratifiées, revêtements ou applications de colles structurales ou de mastics ou de gel coats ou de top coats, **caractérisés en ce que** lesdites pièces ou lesdits revêtemens ou lesdites applications de colles ou de mastic ou de gel coats ou de top coats résultent de la réticulation d'au moins une composition thermodurcissable telle que définie selon l'une des revendications 8 à 10.

26. Pièces composites moulées ou stratifiées, revêtements ou applications tels que définis selon la revendication 25, **caractérisés en ce qu'**ils ont un comportement anti-feu remplissant les critères M1F1 selon la norme NF 16-101 .

27. Gels coats ou top coats selon les revendications 23 et 24, **caractérisés en ce qu'**ils ont un comportement anti-feu intumescent remplissant au moins le critère HL3 selon l'exigence R1 de la norme prCEN/TS 45545-2:2008.

**Patentansprüche**

1. Wärmehärtbare Zusammensetzung, **dadurch gekennzeichnet, dass** sie frei von jeglichem Halogen-Zusatzstoff und jeglicher Halogen-Struktur in ihren Bestandteilen ist, und dass sie folgendes umfasst:

a) 100 Gewichtsteile eines Harzes, wobei das Gewischt in Trockenharzgewicht ausgedrückt ist, umfassend:

a1) mindestens ein ungesättigtes Polyester mit einem Säureindex unter 10, oder eine Kombination von a1) mit
a2) mindestens einem Vinylesterharz, das vorzugsweise
unter den Vinylesterharzderivaten der Epoxy-Phenolformaldehyd-Harzen ausgewählt ist,

b) 40 bis 200 Gewichtsteile mindestens eines reaktiven Verdünnungsmittels, das unter den im Hinblick auf Ethylen ungesättigten Monomeren ausgewählt ist, die mit dem Harz copolymerisierbar sind,
c) 20 bis 110 Gewichtsteile mindestens eines Expansionsmittels durch thermische Zersetzung, wobei das Mittel ausgewählt ist aus: Melamin und seinen Derivaten, Guanidin, Glycin, Urea, Triisocyanuraten, Azodicarbonamid, vorzugsweise unter Melamin und seinen Derivaten und ganz besonders bevorzugt Melamin,
d) 0 bis 250 Gewichtsteile von Aluminiumtrihydrat,
e) 10 bis 80 Gewichtsteile mindestens eines Karbonisationsvorläufers, der ausgewählt ist aus: den multifunktionellen Polyolen, Zuckern, Stärke, Kartoffelstärke, Pentaerythritol (PET) und/oder Derivaten von PET und/oder Erythritol und/oder Sorbitol,
f) 50 bis 200 mindestens einer Zusammensetzung aus: mindestens einem Phosphorderivat und/oder mindestens einem Borsäurederivat,
g) wahlweise mindestens ein Metalloxid,
h) wahlweise weitere Zusatzstoffe und Füllstoffe,
i) wahlweise Verstärkungsmittel auf Basis von natürlichen oder synthetischen Fasern und entsprechende Gewebe,

und dass das Polyester a1) auf Basis eines sauren Bestandteils ist, der von mindestens 60 Mol-% Säure und/oder Maleinanhydrid gebildet ist, und eines Polyolbestandteils, der von mindestens 70 Mol-% Propylenglycol gebildet ist, wobei der mögliche Rest aus Dipropylenglycol und/oder Ethylenglycol und/oder dem Diethylenglycol und/oder dem Neopentylglycol und/oder dem 2-Me Propandiol und/oder Butandiolen und/oder Pentandiolen und/oder Hexandiolen ausgewählt ist.

2. Wärmehärtbare Zusammensetzung nach Anspruch 1, **dadurch gekennzeichnet, dass** sie eine Viskosität unter 1500 mPa.s hat, wobei die Viskosität bei 23°C mit einem Schergradienten von 1000 s$^{-1}$ gemessen wird.

3. Wärmehärtbare Zusammensetzung nach Anspruch 1 oder 2, **dadurch gekennzeichnet, dass** das reaktive Verdünnungsmittel b) folgendes umfasst:

b1) ein Monomer, umfassend:

b1a) mindestens ein aromatisches Vinyl- oder Allyl-Monomer, das ausgewählt ist aus: Styrol- und/oder Vinyl-Toluolen und/oder Tert-Butyl-Styrol und/oder Divinyl-Benzolen, Divinyl-Toluolen und/oder Diallyl-Phthalaten und möglicher Weise
b1b) mindestens ein monofunktionelles (Meth)acryl-Monomer

und wahlweise
b2) mindestens ein multifunktionelles (Meth)acryl-Monomer, umfassend mindestens 2 (Meth)acryl-Funktionen.

4. Wärmehärtbare Zusammensetzung nach Anspruch 3, **dadurch gekennzeichnet, dass** der Gewichtsanteil von b2) 2 bis 60% des Gesamtgewichts des Bestandteils b) beträgt.

5. Wärmehärtbare Zusammensetzung nach Anspruch 3 oder 4, **dadurch gekennzeichnet, dass** das multifunktionelle (Meth)acrylat-Monomer b2) ausgewählt ist aus: Butandiol-di(meth)acrylat (BDD(M)A), Butanglycol(1,3)-di(meth)acrylat (BGD(M)A), Trimethylolpropan-tri(meth)acrylat (TMPT(M)A), Ethylenglycol-di(meth)acrylat (EGD(M)A), Diethylenglycol-di(meth)acrylat (DEGD(M)A), Hexamethylenglycol-di(meth)acrylat (HMD(M)A), Pentaerythritol-tetra(meth)acrylat (PETT(M)A), Neopentylglycol-di(meth)acrylat (NPGD(M)A).

6. Wärmehärtbare Zusammensetzung nach einem der Ansprüche 3 bis 5, **dadurch gekennzeichnet, dass** das multifunktionelle (Meth)acrylat-Monomer b2) das Butandiol 1,4 Di(meth)acrylat (BDD(M)A) ist.

7. Wärmehärtbare Zusammensetzung nach einem der Ansprüche 2 bis 6, **dadurch gekennzeichnet, dass** das multifunktionelle (Meth)acryl-Monomer b2) Methacryl ist.

8. Wärmehärtbare Zusammensetzung nach einem der Ansprüche 1 bis 7, **dadurch gekennzeichnet, dass** das ungesättigte Polyester a1) auf Basis eines sauren Bestandteils ist, der von 60 bis 100 Mol-% Säure und/oder Maleinanhydrid gebildet ist, wobei der Rest auf 100% Säure oder Ortho- und/oder Isophthal-Anhydrid ist.

9. Wärmehärtbare Zusammensetzung nach einem der Ansprüche 1 bis 8, **dadurch gekennzeichnet, dass** der Polyolbestandteil des Polyesters von 70 bis 100 Mol-% Glycolpropylen (PG) gebildet ist.

10. Wärmehärtbare Zusammensetzung nach einem der Ansprüche 1 bis 9, **dadurch gekennzeichnet, dass** das Polyester a1) auf Basis eines sauren Bestandteils ist, der von 100 Mol-% Säure und/oder Maleinanhydrid gebildet ist, und auf der Basis eines Polyolbestandteils ist, der von 100 Mol-% PG gebildet ist.

11. Wärmehärtbare Zusammensetzung nach einem der Ansprüche 1 bis 10, **dadurch gekennzeichnet, dass** das Harz a) aus den Polyestern a1) ausgewählt ist.

12. Wärmehärtbare Zusammensetzung nach einem der Ansprüche 1 bis 10, **dadurch gekennzeichnet, dass** das Harz a) aus den Kombinationen von mindestens einem Polyester a1) mit mindestens einem Vinylester a2) ausgewählt ist.

13. Wärmehärtbare Zusammensetzung nach einem der Ansprüche 1 bis 12, **dadurch gekennzeichnet, dass** sie einen Bestandteil d), wie nach Anspruch 1 definiert, mit einem Gewichtsanteil bis zu 175 Teile auf 100 Teile des Harzes a) umfasst.

14. Verfahren zur Herstellung einer wärmehärtbaren Zusammensetzung, wie in einem der Ansprüche 1 bis 13 definiert, **dadurch gekennzeichnet, dass** es den Schritt des Mischens einer Zusammensetzung umfasst, die die Bestandteile a) und b) umfasst oder von diesen gebildet ist, mit den Bestandteilen c) bis i).

15. Verwendung einer wärmehärtbaren Zusammensetzung, wie in einem der Ansprüche 1 bis 13 definiert, als Zusammensetzung zum Formen von Verbundteilen oder als Zusammensetzung zum Auftragen für Laminate oder als Zusammensetzung für Strukturkleber oder eines Abdichters oder Polyesterbeton oder Coat-Gel oder Top-Coat.

16. Verwendung nach Anspruch 15 als Zusammensetzung zum Formen von Verbundteilen, die ausgewählt ist aus: BMC, AMC, CIC.

17. Verwendung nach Anspruch 15 als Zusammensetzung zum Auftragen für Laminate und Verbundteile durch Pultrusion oder durch Guss oder durch Projektion oder durch Kontakt oder durch Infusion oder durch Zentrifugieren oder durch Einspritzen/Kompression (RTM) oder durch Filamentwicklung oder durch kontinuierliches Imprägnieren.

18. Verwendung nach Anspruch 15 als Zusammensetzung für Strukturkleber zum Zusammenfügen von Verbundteilen.

19. Verwendung nach Anspruch 15 als Zusammensetzung für Gel-Coat oder Top-Coat, die pigmentiert oder nicht pigmentiert ist.

20. Verwendung einer wärmehärtbaren Zusammensetzung, wie in einem der Ansprüche 1 bis 13 definiert, **dadurch gekennzeichnet, dass** sie die Herstellung und/oder Verwendung von gegossenen Verbundteilen oder anderen laminierten Verbundteilen oder Strukturklebern oder Abdichtungen oder Gel-Coats oder Top-Coats auf dem Gebiet der Feuerbeständigkeit betrifft.

21. Verwendung nach Anspruch 20, **dadurch gekennzeichnet, dass** sie Anwendungen auf dem Gebiet des Verkehrs, auf dem Gebiet des Bauwesens, auf dem Gebiet des Bauingenieurswesents, auf dem Gebiet des öffentlichen Bauwesens, wie Brücken und Tunnels, oder auf dem Gebiet der Freizeiteinrichtungen und des Stadtmobiliars betrifft.

22. Verwendung nach Anspruch 20 oder 21, **dadurch gekennzeichnet, dass** die Herstellung und Verwendung den Eisenbahnverkehr betreffen.

23. Gegossene oder laminierte Verbundteile, Verkleidungen, Auflagen von Strukturklebern oder Abdichtungen oder Gel-Coats oder Top-Coats, **dadurch gekennzeichnet, dass** die Teile oder Verkleidungen oder Auflagen von Klebern oder Kitts oder Gel Coats oder Top Coats aus der Vernetzung mindestens einer wärmehärtbaren Zusammensetzung, wie in einem der Ansprüche 1 bis 13 definiert, stammen.

24. Gegossene oder laminierte Verbundteile, Verkleidungen, Auflagen, wie in Anspruch 23 definiert, **dadurch gekennzeichnet, dass** sie ein intumeszierendes feuerfestes Verhalten haben, das mindestens das Kriterium HL2 nach der Anforderung R1 der Norm prCEN/TS 45545-2:2008 erfüllt.

25. Gegossene oder laminierte Verbundteile, Verkleidungen oder Auflagen von Strukturklebern oder Abdichtungen oder Gel-Coats oder Top-Coats, **dadurch gekennzeichnet, dass** die Teile oder Verkleidungen oder Auflagen von Klebern oder Abdichtungen oder Gel-Coats oder Top-Coats aus der Vernetzung mindestens einer wärmehärtbaren Zusammensetzung, wie in einem der Ansprüche 8 bis 10 definiert, stammen.

26. Gegossene oder laminierte Verbundteile, Verkleidungen oder Auflagen, wie in Anspruch 25 definiert, **dadurch gekennzeichnet, dass** sie ein feuerfestes Verhalten haben, das mindestens die Kriterien M1F1 nach der Norm NF 16-101 erfüllt.

27. Gel-Coats oder Top-Coats nach den Ansprüchen 23 und 24, **dadurch gekennzeichnet, dass** sie ein intumeszierendes feuerfestes Verhalten haben, das mindestens das Kriterium HL3 nach der Anforderung R1 der Norm prCEN/TS 45545-2:2008 erfüllt.

**Claims**

1. A thermosetting composition, **characterized in that** it is devoid of any halogenated additive and of any halogenated structure in its components and **in that** it comprises:

   a) per 100 parts by weight of a resin, such weight being expressed as weight of dry resin, comprising:

   a1) at least one unsaturated polyester, having an acid number of less than 10, or a combination of a1) with a2) at least one vinyl ester resin, preferably selected from among the vinyl ester resins derived from epoxydized phenol-formaldehyde resins,

   b) 40 to 200 parts by weight of at least one reactive diluent selected from among the ethylenically unsaturated monomers copolymerizable with the said resin,
   c) 20 to 110 parts by weight of at least one agent for expansion by thermal decomposition, such agent being selected from among: melamine and derivatives thereof, guanidine, glycine, urea, triisocyanurates, azodicarbonamide, preferably from among melamine and its derivatives and more preferably melamine,

d) 0 to 250 parts by weight of aluminium trihydrate,

e) 10 to 80 parts by weight of at least one agent which is a precursor of charring selected from among; polyfunctional polyols sugars, starch, potato flour, pentaerythritol (PET) and/or derivatives of PET and/or erythritol and/or sorbitol,

f) 50 to 200 parts of at least one compound from among: at least one phosphorus derivative and/or at least one boric acid derivative,

g) optionally, at least one metal oxide,

h) optionally, other additives and fillers,

i) optionally, reinforcements based on natural fibres or synthetic fibres and corresponding fabrics,

and **in that** said polyester a1) is based on an acid component composed of at least 60 mol% of maleic acid and/or anhydride and on a polyol component composed of at least 70 mol% of propylene glycol, with any remainder being selected from among dipropylene glycol and/or ethylene glycol and/or diethylene glycol and/or neopentyl glycol and/or 2-methylpropanediol and/or butanediols and/or pentanediols and/or hexanediols.

2. The thermosetting composition according to claim 1, **characterized in that** it has a viscosity of less than 1500 mPas, such viscosity being measured at 23° C under a shear gradient of 1000 s$^{-1}$,

3. The thermosetting composition according to claim 1 or 2, **characterized in that** the said reactive diluent b) comprises:

    b1) a monomer comprising:

        b1a) at least one aromatic vinyl or allyl monomer chosen from among: styrene and/or vinyltoluenes and/or tert-butylstyrene and/or divinylbenzenes, divinyltoluenes and/or diallyl phthalates and optionally,
        b1b) at least one monofunctional (meth)acrylic monomer, and optionally

    b2) at least one polyfunctional (meth)acrylic monomer, comprising at least 2 (meth)acrylic functional groups.

4. The thermosetting composition according to claim 3, **characterized in that** the level by weight of b2) is from 2 to 60% of the total weight of the component b).

5. The thermosetting composition according to claim 3 or 4, **characterized in that** the said polyfunctional (meth)acrylic monomer b2) is selected from among: butanediol di(meth)acrylate (BDD(M)A), (1,3-)butane glycol di(meth) acrylate (BGD(M)A), trimethylolpropane tri(meth)acrylate (TMPT(M)A), ethylene glycol di(meth)acrylate (EGD(M)A), diethylene glycol di(meth)acrylate (DEGD(M)A), hexamethylene glycol di(meth)acrylate (HMD(M)A), pentaerythritol tetra(meth)acrylate (PETT(M)A), and neopentyl glycol di(meth)acrylate (NPGD(M)A).

6. The thermosetting composition according to one of claims 3 to 5, **characterized in that** the said polyfunctional (meth)acrylic monomer b2) is 1,4-butanediol di(meth)acrylate (BDD(M)A).

7. The thermosetting composition according to one of claims 2 to 6, **characterized in that** the said polyfunctional (meth)acrylic monomer b2) is methacrylic.

8. The thermosetting composition according to one of claims 1 to 7, **characterized in that** the said unsaturated polyester a1) is based on an acid component composed of 60 to 100 mol % of maleic acid and/or anhydride, the remainder with respect to 100% being ortho- and/or iso- phtalic acid or anhydride thereof.

9. The thermosetting composition according to one of claims 1 to 8, **characterized in that** the polyol component of the said polyester is composed of 70 to 100 mol % of propylene glycol (PG).

10. The thermosetting composition according to one of claims 1 to 9, **characterized in that** the said polyester a1) is based on an acid component composed of 100 mol % of maleic acid and/or anhydride thereof and on a polyol component composed of 100 mol % ofPG.

11. The thermosetting composition according to one of claims 1 to 10, **characterized in that** the said resin a) is selected from among the said polyesters a1).

12. The thermosetting composition according to one of claims 1 to 10, **characterized in that** the said resin a) is selected from among the combinations of at least one polyester a1) with at least one vinyl ester a2).

13. The thermosetting composition according to one of claims 1 to 12, **characterized in that** it comprises a compound d) as defined according to claim 1, at a level by weight ranging up to 175 parts per 100 parts of the said resin a).

14. A process for the preparation of a thermosetting composition as defined according to one of claims 1 to 13, **characterized in that** it comprises the step of mixing a composition that comprises or is composed of the said components a) and b) with the said components c) to i).

15. The use of a thermosetting composition as defined according to one of claims 1 to 13 as a moulding composition for composite components or an application composition for laminates or a structural adhesive or mastic or polyester concrete or gel coat or top coat composition.

16. The use according to claim 15, as a moulding composition for composite components, which is selected from among: BMC, AMC, and ClC.

17. The use according to claim 15, as an application composition for laminates and composite components by the pultrusion route or by casting or by spraying or by contact or by infusion or by centrifuging or by injection/compression moulding (RTM) or by filament winding or by continuous impregnation.

18. The use according to claim 15, as a structural adhesive composition for assembling composite components.

19. The use according to claim 15, as a gel coat or top coat composition which is optionally pigmented.

20. The use of a thermosetting composition as defined according to one of claims 1 to 13, **characterized in that** it relates to the manufacture and/or the use of moulded composite components or other laminated composite components or structural adhesives or mastics or gel coats or top coats, in the fire-resistant materials sector.

21. The use according to claim 20, **characterized in that** it relates to applications in the transport sector, in the construction sector, in the civil engineering and public works sector, such as bridges and tunnels or the leisure and street furniture sector.

22. The use according to claim 20 or 21, **characterized in that** the said manufacture and use relate to rail transport.

23. Moulded or laminated composite components, coatings, applications of structural adhesives or of mastics or of gel coats or of top coats, **characterized in that** the said components or the said coatings or applications of adhesives or of mastic or of gel coats or of top coats result from the crosslinking of at least one thermosetting composition as defined according to one of claims 1 to 13.

24. The moulded or laminated composite components, coatings, or applications as defined according to claim 23, **characterized in that** they have an intumescent fire-retardant behaviour meeting at least the HL2 criterion according to the R1 requirement of the prCEN/TS 45545-2:2008 standard,

25. Moulded or laminated composite components, coatings or applications of structural adhesives or of mastics or of gel coats or of top coats, **characterized in that** the said components or the said coatings or the said applications of adhesives or of mastic or of gel coats or of top coats result from the crosslinking of at least one thermosetting composition as defined according to one of claims 8 to 10,

26. The moulded or laminated composite components, coatings, or applications as defined according to claim 25, **characterized in that** they have a fire-retardant behaviour meeting the M1F1 criteria according to the NF 16-101 standard.

27. Gel coats or top coats according to claims 23 and 24, **characterized in that** they have an intumescent fire-retardant behaviour meeting at least the HL3 criterion according to the R1 requirement of the prCEN/TS 45545-2:2008 standard.

**EP 2 358 797 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9731056 A